# EUROPEAN PATENT APPLICATION

(11) **EP 2 196 939 A1**
(43) Date of publication of application: **16.06.2010**
(21) Application number: 08835912.0
(22) Date of filing: 09.09.2008
(51) Int. Cl.: G06F 21/24, G06F 21/22, H04L 9/32

(54) **COPYRIGHT PROTECTION SYSTEM, REPRODUCTION DEVICE, AND REPRODUCTION METHOD**

(30) Priority: 02.10.2007 US 960519 P
(71) Applicant: Panasonic Corporation, Kadoma-shi Osaka 571-8501 (JP)
(72) Inventor: NAKANO, Toshihisa, Osaka 540-6207 (JP); YAMAMOTO, Masaya, Osaka 540-6207 (JP); OKADA, Tomoyuki, Osaka 540-6207 (JP); KOZUKA, Masayuki, Osaka 540-6207 (JP)
(74) Representative: Grünecker, Kinkeldey, Stockmair & Schwanhäusser Anwaltssozietät
(86) International application number: PCT/JP2008/002483
(87) International publication number: WO 2009/044508

(57) **Abstract**

The object of the present invention is to provide a reproduction apparatus that is capable of preventing personal information of users from being transmitted to an external apparatus that is under management of a malicious person.

The reproduction apparatus uses a revocation list and a valid-content list in combination in order to prevent transmission of personal information of users. It is possible to prevent transmission of personal information by revoking certificates to be revoked because of being exposed or hacked at a certain timing, by listing them in the revocation list. Meanwhile, it is possible to allow use of contents that have been manufactured before the exposure, by listing them in the valid-content list. Accordingly, it is possible to realize both the security and the user convenience at the same time.

## Description

### Technical Field

The present invention relates to services provided through cooperation between a recording medium on which digital contents such as movie and music are recorded and a reproduction terminal apparatus that is connected to an external network. In particular, the present invention relates to a technique to prevent unauthorized acquisition of viewing histories of the reproduction terminal apparatus.

### Background Art

In recent years, systems for distributing digital contents (hereinafter simply called "contents"), specifically digitized copyrighted works such as movie and music, by recording contents on a recording medium or transmitting contents via a broadband network, have been spreading widely in accordance with increasing capacity of recording media and spread of broadband networks. In such systems, it is required to allow playback and copying of contents only under limitations based on agreement with copyright holders, in order to protect copyrights of contents. As a prior art to protect copyrighted works against unauthorized copying without permission of copyright holders, a method of using cryptographic technology is well known.

Meanwhile, in accordance with rapid spread of the Internet, the number of systems whose communication infrastructures are established based on the Internet has been increasing. For example, there is an e-commerce system for trading via the Internet. Moreover, trends of providing new services with linking recording media and the Internet have been accelerating. For example, there is a service of transmitting extra contents (e.g. subtitles and related game programs) relating to a recording medium to a user, in response to an identifier that uniquely identifies the recording medium to a server via the Internet. Also, it is possible to transmit content viewing histories and the likes of the user, stored in/held by a reproduction apparatus, to the server via the Internet. Accordingly, the user can enjoy services that suit the user's likes and tastes. As a prior art for protecting data to be transmitted to the server, a method of using authentication techniques and signature techniques is well known. Such techniques are disclosed in detail by Non-patent Document 1.
[Non-Patent Document 1]
"Secure Electronic Commerce: Building the Infrastructure for Digital Signatures and Encryption", translated into Japanese by Shinichiro Yamada, published by Pearson Education Japan.

### Disclosure of the Invention

### Problems to be solved by the Invention

As explained above, the user transmits the viewing histories of the user to the server to enjoy services that suit the user's likes and tastes. However, this is problematic because the set of viewing histories, which is a kind of personal information of the user, is collected by the server regardless of whether the manager of the server is malicious or not. As a result, if the server manager is malicious, there are possibilities that the set of viewing histories, which is a kind of personal information of the user, will be abused behind the user's back, for example.

Accordingly, to solve the problem described above, the present invention aims to provide a copyright protection system, a reproduction apparatus and a reproduction method that are capable of preventing personal information of a user from being transmitted to an external server that is under management of a malicious party.

### Means for solving the problems

To fulfill the above-described object, one aspect of the present invention is a reproduction apparatus that reproduces a content, comprising: a reading unit operable to read, from a recording medium, a content, a program including an instruction to connect to an external network, and a certificate for use in verification of validity of the program; a first verification unit operable to verify validity of the program, using the certificate; an execution unit operable to execute the program verified by the first verification unit; a second verification unit operable to verify validity of the certificate; a communication unit operable to connect to the external network and operate according to the instruction included in the program; and a control unit operable to perform control to restrain the communication unit from connecting to the external network if the second verification unit judges that the certificate is invalid, even if the first verification unit has judged that the program is valid.

### Advantageous effects of the Invention

With the stated structure, the reproduction apparatus verifies validity of the certificate for the program that includes the instruction to connecting to the external network, and if judged that the certificate is invalid, performs the control to restrain the communication unit from connecting to the external network. Accordingly, the reproduction apparatus is capable of preventing information that pertains to viewing of the content by the user from being transmitted to another apparatus.

Here, if the certificate is invalid, there are possibilities that the instruction included in the program has been tampered with and rewritten with an instruction to transmit the information that pertains to the viewing of the content by the user to an external server that is under management of a malicious party. Therefore, in the case the certificate has been proved to be invalid as a result of the verification, the reproduction apparatus performs the control such that the communication unit is restrained from connecting to the external network. With this operation, the present invention achieves an advantageous effect that the information pertaining to the viewing by the user is prevented from being transmitted to a server that is under management of a malicious party.

### Brief Description of the Drawings

FIG. 1 is a block diagram showing the structure of a copyright protection system pertaining to an embodiment of the present invention;
FIG. 2 is a block diagram showing the structure of a CA terminal apparatus pertaining to the embodiment;
FIG. 3 is an example of a revocation list pertaining to the embodiment;
FIG. 4 is an example of a white list pertaining to the embodiment;
FIG. 5 is an example of a certificate pertaining to the embodiment;
FIG. 6 is a block diagram showing the structure of a content-provider terminal apparatus pertaining to the embodiment;FIG. 7 is an example of data to be recorded on a recording medium pertaining to the embodiment;
FIG. 8 is a block diagram showing the structure of a reproduction apparatus pertaining to the embodiment;
FIG. 9 is a flowchart showing operations performed by the reproduction apparatus pertaining to the embodiment;
FIG. 10 is a flowchart showing operations performed by the reproduction apparatus pertaining to the embodiment; and
FIG. 11 is a diagram showing the structure of an LSI that realizes the reproduction apparatus pertaining to the embodiment.

### Explanations of References

- 101: CA terminal apparatus
- 102: content-provider terminal apparatus
- 103: recording medium
- 104: reproduction apparatus

### Best Mode for Carrying Out the Invention

One aspect of the present invention is a reproduction apparatus that reproduces a content, comprising: a reading unit operable to read, from a recording medium, a content, a program including an instruction to connect to an external network, and a certificate for use in verification of validity of the program; a first verification unit operable to verify validity of the program, using the certificate; an execution unit operable to execute the program verified by the first verification unit; a second verification unit operable to verify validity of the certificate; a communication unit operable to connect to the external network and operate according to the instruction included in the program; and a control unit operable to perform control to restrain the communication unit from connecting to the external network if the second verification unit judges that the certificate is invalid, even if the first verification unit has judged that the program is valid.

The second verification unit may store therein a certificate list that includes an identifier of at least one certificate that is to be judged as having been revoked, judge whether an identifier of the certificate read by the reading unit is included in the certificate list, and determine that the certificate has been revoked if judged that the identifier of the certificate is included in the certificate list.

The program may further include an acquisition instruction to acquire the certificate list from an external apparatus via the external network, when the execution unit executes the acquisition instruction by executing the program, the control unit may perform the control such that the communication unit connects to the external network before the second verification unit verifies validity of the certificate, in order that the second verification unit receives the certificate list according to the acquisition instruction, and the second verification unit may store therein the certificate list received from the external apparatus.

The program may be either a program that includes an acquisition instruction to acquire the certificate list from an external apparatus via the external network or a program that does not include the acquisition instruction, and if the program does not includes the acquisition instruction to acquire the certificate list from the external apparatus via the external network, the control unit may perform the control to restrain the communication unit from connecting to the external network, before the second verification unit verifies validity of the certificate.

The certificate may include a public key, the program may be given a signature based on a private key corresponding to the public key, the first verification unit may verify validity of the program by verifying the signature given to the program, the control unit may perform the control to restrain the communication unit from connecting to the external network if the second verification unit judges that the identifier of the certificate is included in the certificate list, even if the first verification unit has judged that the program is valid.

With the stated structure, the reproduction apparatus is capable of control the communication unit according to the result of the verification of the certificate. If the certificate read by the reading unit is judged as having been revoked based on the certificate list showing the identifier of at least one certificate that is to be judged as having been revoked, the control unit restrains the communication unit from connecting to the external network. Accordingly, it is possible to prevent the information pertaining to the viewing of the content from being transmitted to another apparatus via the external network. Note that a certificate that is to be judged as having been revoked means a certificate that has been exposed or hacked at a certain timing and whose validity should be revoked.

The reproduction apparatus may further comprise a confirmation unit operable to confirm whether the recording medium is an old recording medium that has been manufactured before the certificate has been revoked, wherein the control unit may perform the control such that the communication unit connects to the external network if the confirmation unit judges that the recording medium is the old medium, even if the second verification unit has judged that the certificate has been revoked.

The recording medium may further store thereon first information that pertains to the recording medium, and the confirmation unit may acquire second information that indicates an old recording medium that has been manufactured before the certificate has been revoked, and compare the first information with the second information to judge whether the recording medium is the old recording medium.

The first information may be an identifier of the recording medium, the second information may be a recording medium list that includes an identifier of at least one recording medium that has been manufactured before the certificate has been revoked, and the confirmation unit may confirm whether the identifier of the recording medium is included in the recording medium list, and determine that the recording medium is the old recording medium if confirmed that the identifier of the recording medium is included in the recording medium list.

The program may further include an acquisition instruction to acquire the recording medium list from an external apparatus via the external network, when the execution unit executes the acquisition instruction by executing the program, the control unit may perform the control such that the communication unit connects to the external network before the confirmation unit judge whether the recording medium is the old recording medium, in order that the confirmation unit receives the recording medium list according to the acquisition instruction, and the confirmation unit may store therein the recording medium list received from the external apparatus.

If the communication unit is simply restrained from connecting to the external network in the case the certificate has been revoked, the following problem occurs with respect to an old recording medium that has been manufactured before the certificate is judged as having been revoked. That is, in the case of such an old recording medium, although it has been able to transmit the information pertaining to the viewing of the content recorded on the old recording medium to another apparatus via the external network before the certificate is judged as having been revoked by execution of the program corresponding to the certificate, it becomes impossible to transmit the information after the certificate is judged as having been revoked. In this regard, with the structure stated above, the reproduction apparatus judges a revoked certificate as having been revoked while allowing transmission of the information pertaining to the viewing of the content recorded on the old recording medium that has been manufactured before the certificate is judged as having been revoked, in the same manner as before the judgment. This realizes both the security and the user convenience at the same time.

Another aspect of the present invention is a copyright protection system that includes a Certificate Authority terminal apparatus, a content-provider terminal apparatus, and a reproduction apparatus that reproduces a content, the Certificate Authority terminal apparatus comprising a certificate generation unit operable to generate a certificate for use in verification of validity of a program that includes an instruction to transmit information that pertains to viewing of a content to another apparatus via an external network, the content-provider terminal apparatus comprising a recording unit operable to record the content, the certificate generated by the Certificate Authority terminal apparatus and the program onto a recording medium, and the reproduction apparatus comprising: a reading unit operable to read, from the recording medium, the content, the program and the certificate; a first verification unit operable to verify validity of the program, using the certificate; an execution unit operable to execute the program verified by the first verification unit; a second verification unit operable to verify validity of the certificate; a communication unit operable to connect to the external network and operate according to the instruction included in the program; and a control unit operable to perform control to restrain the communication unit from connecting to the external network if the second verification unit judges that the certificate is invalid, even if the first verification unit has judged that the program is valid.

With the stated structure, the reproduction apparatus included in the copyright protection system verifies validity of the certificate for the program that includes the instruction to transmit the information to another apparatus, and if judged that the certificate is invalid, performs the control to restrain the communication unit from connecting to the external network. Accordingly, the reproduction apparatus is capable of preventing information that pertains to viewing of the content by the user from being transmitted to another apparatus.

The following describes a preferred embodiment of the present invention, with reference to the drawings.

### Embodiment 1

### 1.1 Structure of copyright protection system

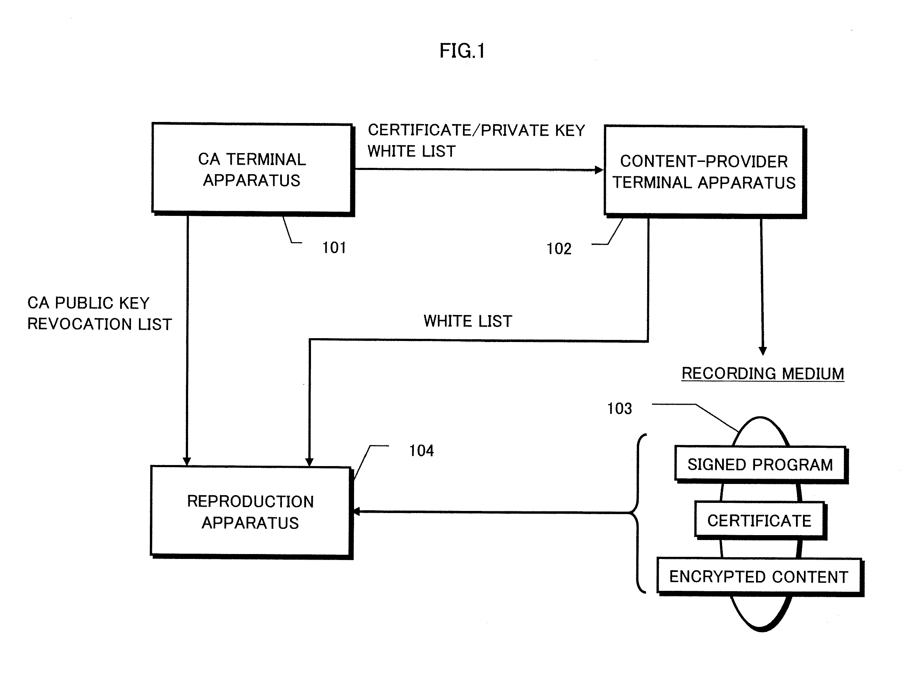

As FIG. 1 shows, a copyright protection system includes a CA terminal apparatus 101, a content-provider terminal apparatus 102, a recording medium 103 and a reproduction apparatus 104.

The CA terminal apparatus 101 provides the content-provider terminal apparatus 102 with a pair of a certificate and a private key. Also, in response to a request from the content-provider terminal apparatus 102, the CA terminal apparatus 101 provides the content-provider terminal apparatus 102 with a white list signed by the CA. Further, the CA terminal apparatus 101 provides the reproduction apparatus 104 with a public key owned by the CA (a CA public key) and a revocation list signed by the CA. The details of the white list are described later.

In response to a request from the reproduction apparatus 104, the content-provider terminal apparatus 102 provides the reproduction apparatus 104 with the white list signed by the CA. Also, the content-provider terminal apparatus 102 signs a program to be recorded on the recording medium 103 using the private key received from the CA terminal apparatus 101, and records the signed program on the recording medium 103. At this moment, the content-provider terminal apparatus 102 also records the certificate corresponding to the private key used for generation of the signature, on the recording medium 103. Finally, the content-provider terminal apparatus 102 records a content that has been encrypted (hereinafter also referred to as "the encrypted content") on the recording medium 103. The program to be recorded on the recording medium 103 is a program for reproduction of contents, such as a program for showing navigation information, menu information, and so on.

The reproduction apparatus 104 receives the CA public key and the revocation list from the CA terminal apparatus 101, receives the white list from the content-provider terminal apparatus 102, and reproduces the contents recorded on the recording medium 103 using the lists.

### 1.2 Structure of CA terminal apparatus 101

### The following describes the structure of the CA terminal apparatus 101 in detail.

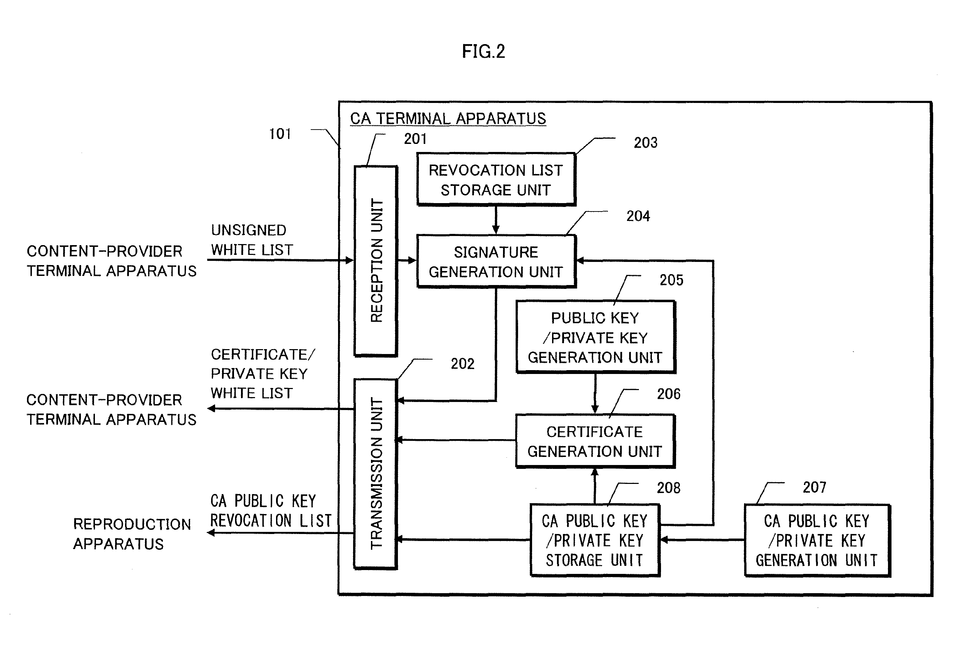

As FIG. 2 shows, the CA terminal apparatus 101 includes a reception unit 201, a transmission unit 202, a revocation list storage unit 203, a signature generation unit 204, a public key/private key generation unit 205, a certificate generation unit 206, a CA public key/private key generation unit 207, and a CA public key/private key storage unit 208.

The CA terminal apparatus 101 1 is structured from a microprocessor, a RAM, a ROM, a hard disk and so on, which are not specifically illustrated. The RAM, the ROM and the hard disk store computer programs. The CA terminal apparatus 101 carries out functions thereof as a result of the microprocessor operating in accordance with the computer programs.

As FIG. 2 shows, regarding the CA terminal apparatus 101, the functional blocks, such as the reception unit 201, the transmission unit 202, the revocation list storage unit 203, the signature generation unit 204, the public key/private key generation unit 205, the certificate generation unit 206, the CA public key/private key generation unit 207 and the CA public key/private key storage unit 208, are typically realized as LSI(s), which is an integrated circuit. Each of the units may be individually realized as one chip. Also, two or more units, or part of each unit may be realized as one chip.

Note that although an LSI is used here, the circuit may be variously described as an IC, a system LSI, a super LSI or an ultra LSI depending on the level of integration.

Note also that the technique used for the integration does not have to be LSI. A special-purpose circuit or general-purpose processor may be used instead. LSI circuits whose configurations can be altered after production such as the programmable FPGA (Field Programmable Gate Array) or a reconfigurable processor whose circuit cell connections and settings are reconfigurable may also be used.

Moreover, if, due to progress in the field of semiconductor technology or the derivation of another technology, a technology to replace LSI emerges, such a technology may be used to integrate the functional blocks. The use of biotechnology or the like is considered to be a possibility.

Finally, each functional block may be realized with software, or a combination of an LSI and software. The software may be tamper-resistant.

### (1) Reception unit 201

The recpeption unit 201 receives a white list to which a signature has not been given (an unsigned white list) from the content-provider terminal apparatus 102. A white list is a list showing whether contents recorded on a recording medium are valid or not, independently from whether a certificate recorded on the same recording medium has been revoked or not by the revocation list. In this embodiment, the white list is a list of contents that should be considered as valid, independently from whether the certificate is invalid or not. However, the same function may be realized in various manners. For example, contents that should be considered as invalid may be listed so that other contents that are not listed are considered as valid. The details of the white list are described later.

### (2) Transmission unit 202

The transmision unit 202 transmits a pair of a certificate and a private key, generated by the public key/private key generation unit 205 and the ceritifcate generation unit 206, and a white list to which a signature has been given, to the content-provider terminal apparatus 102. The transmision unit 202 also transmits a CA public key generated by the CA public key/private key generation unit 207, and a revocation list to which a signature has been given, to the reproduction apparatus 104.

### (3) Revocation list storage unit 203

The revocation list storage unit 203 stores a revocation list that has not been signed yet, and the revocation list is to be signed by the signature generation unit 204. Here, the revocation list is a list showing whether a certificate has been revoked or not. The certificate is described later. In this embodiment, the revocation list is realized as a list showing only certificates that are to be revoked. However, the same function may be realized in various manners. For example, the list may show only certificates that have not been revoked.

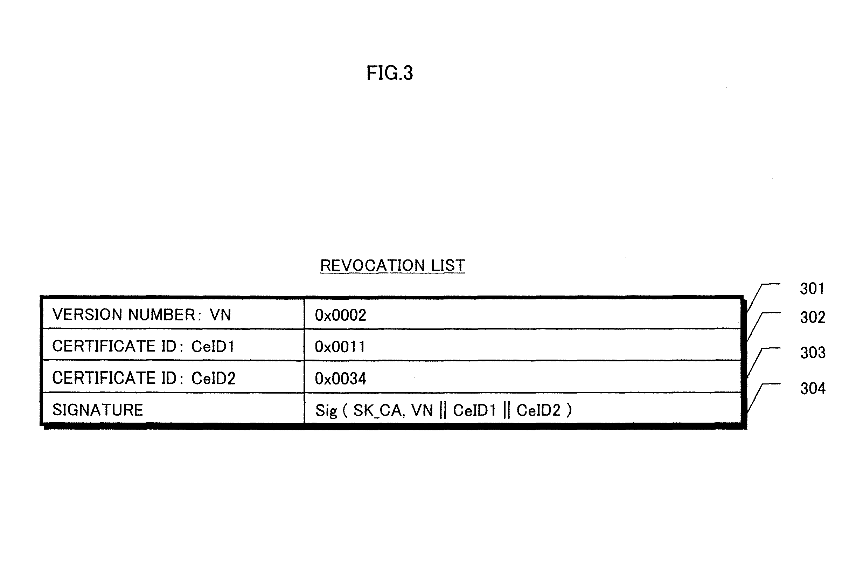

FIG. 3 shows an example of a revocation list to which a signature has been given. A version number field 301 holds a version number that shows a version of the revocation list. Certificate ID fields 302 and 303 each hold an ID of a certificate that should be revoked. A signature field 304 holds a signature that has been given to concatenated data formed from the version number and the certificate IDs. Here, Sig (X, Y) is a function for generating a signature for data Y, using a secret key X. SK_CA is a CA private key, and a sign "∥" means concatenation of data.

As described above, the revocation list is a list showing whether the certificate has been revoked or not. The example of FIG. 3 shows that the certificates having a certificate ID 0x0011 and a certificate ID 0x0034 have been revoked.

### (4) Signature generation unit 204

The signature generation unit 204 generates a signature, using a CA private key stored in the CA public key/private key storage unit 208. Specifically, the signature generation unit 204 gives a signature to a revocation list stored in the revocation list storage unit 203, and gives a signature to an unsigned white list that the reception unit 201 has received from the content-provider terminal apparatus 102. Note that the signature described in this embodiment is a general digital signature. Since the technique for giving a signature is well known, an explanation thereof is omitted here.

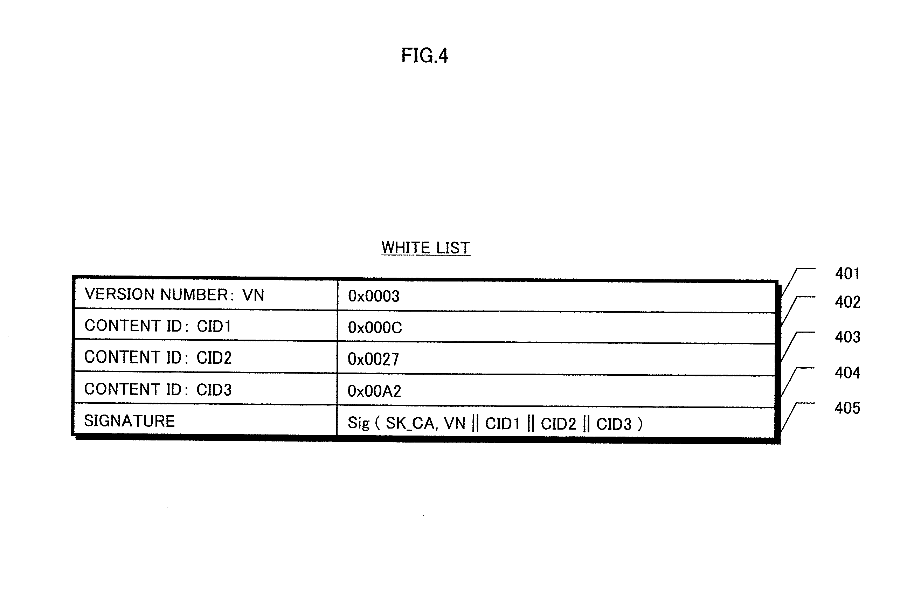

FIG. 4 shows an example of a white list to which a signature has been given. A version number field 401 holds a version number that shows a version of the white list. Content ID fields 402, 403 and 404 each hold an ID of a content that should be considered as valid. A signature field 405 holds a signature that has been given to concatenated data formed from the version number and the content IDs.

As described above, the white list is a list showing that the contents recorded on the recording medium are valid. The example of FIG. 4 shows that the three contents identified by a content ID 0x000C, a content ID 0x0027 and a content ID 0x00A2 are valid.

### (5) Public key/private key generation unit 205

The public key/private key generation unit 205 generates a pair of a public key and a private key corresponding thereto. The public key is part of a certificate to be transmitted to the content-provider terminal apparatus 102.

### (6) Certificate generation unit 206

The certificate generation unit 206 generates a certificate by generating a signature using a CA private key stored in the CA public key/private key storage unit 208 and giving the signature to a public key generated by the public key/private key generation unit 205.

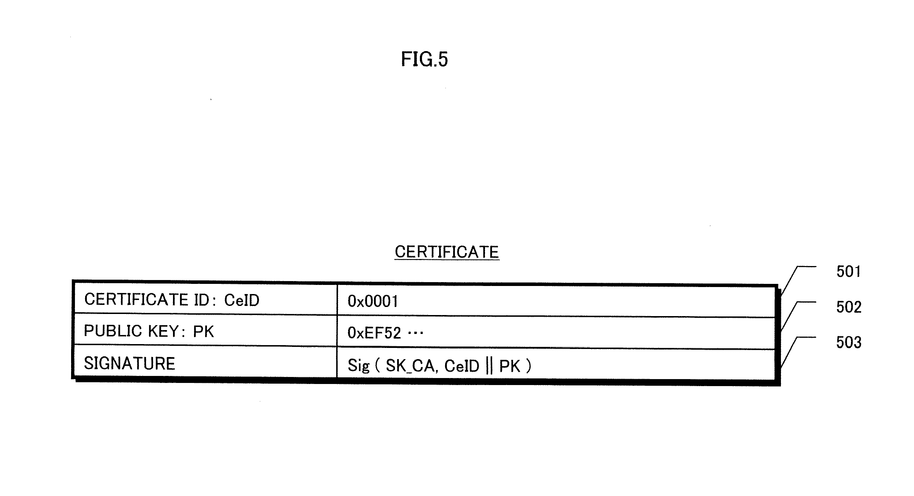

FIG. 5 shows an example of a certificate. A certificate ID field 501 holds an ID that uniquely identifies the certificate. A public key field 502 holds a public key generated by the public key/private key generation unit 205. A signature field 503 holds a signature that has been given to concatenated data formed from the certificate ID and the public key.

### (7) CA public key/private key generation unit 207

The CA public key/private key generation unit 207 generates a pair of a public key, to be used by the CA, and a private key corresponding thereto.

### (8) CA public key/private key storage unit 208

The CA public key/private key storage unit 208 stores a pair of a CA public key and a CA private key generated by the CA public key/private key generation unit 207. The CA public key is transmitted to the reproduction apparatus 104 via the transmission unit 202. The CA private key is used by the signature generation unit 204 or the certificate generation unit 206 to generate signature of the CA.

### 1.3 Structure of content-provider terminal apparatus 102

### The following describes the structure of the content-provider terminal apparatus 102 in detail.

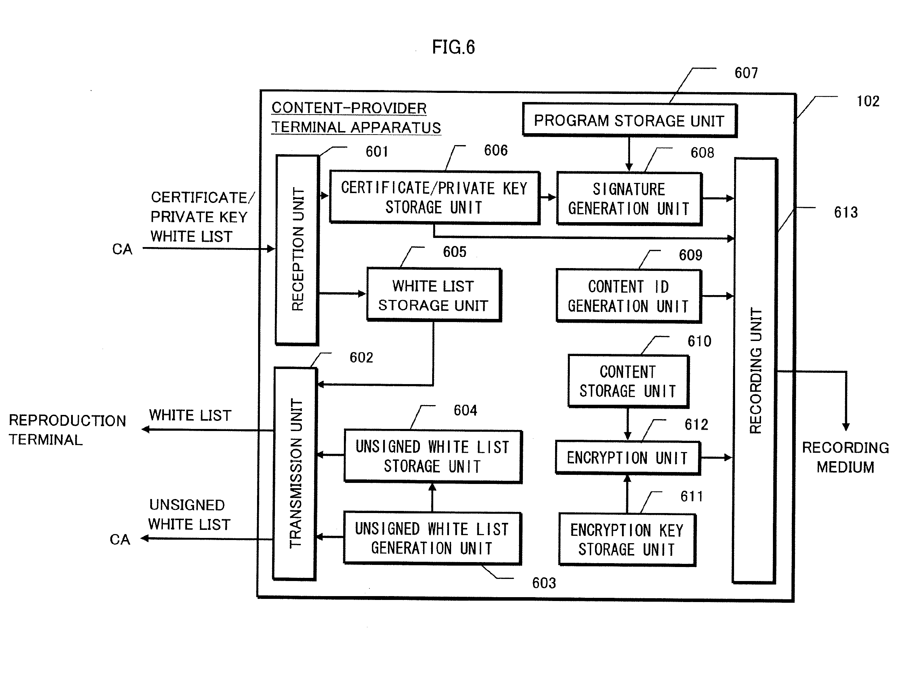

As FIG. 6 shows, the content-provider terminal apparatus 102 includes a reception unit 601, a transmission unit 602, an unsigned white list generation unit 603, an unsigned white list storage unit 604, a white list storage unit 605, a certificate/private key storage unit 606, a program storage unit 607, a signature generation unit 608, a content ID generation unit 609, a content storage unit 610, an encryption key storage unit 611, an encryption unit 612, and a recording unit 613.

The content-provider terminal apparatus 102 is structured from a microprocessor, a RAM, a ROM, a hard disk and so on, which are not specifically illustrated. The RAM, the ROM and the hard disk store computer programs. The content-provider terminal apparatus 102 carries out functions thereof as a result of the microprocessor operating in accordance with the computer programs.

As FIG. 6 shows, regarding the content-provider terminal apparatus 102, the functional blocks, such as the reception unit 601, the transmission unit 602, the unsigned white list generation unit 603, the unsigned white list storage unit 604, the white list storage unit 605, the certificate/private key storage unit 606, the program storage unit 607, the signature generation unit 608, the content ID generation unit 609, the content storage unit 610, the encryption key storage unit 611, the encryption unit 612, and the recording unit 613, are typically realized as LSI(s), which is an integrated circuit. Each of the units may be individually realized as one chip. Also, two or more units, or part of each unit may be realized as one chip.

Note that although an LSI is used here, the circuit may be variously described as an IC, a system LSI, a super LSI or an ultra LSI depending on the level of integration.

Note also that the technique used for the integration does not have to be LSI. A special-purpose circuit or general-purpose processor may be used instead. LSI circuits whose configurations can be altered after production such as the programmable FPGA (Field Programmable Gate Array) or a reconfigurable processor whose circuit cell connections and settings are reconfigurable may also be used.

Moreover, if, due to progress in the field of semiconductor technology or the derivation of another technology, a technology to replace LSI emerges, such a technology may be used to integrate the functional blocks. The use of biotechnology or the like is considered to be a possibility.

Finally, each functional block may be realized with software, or a combination of an LSI and software. The software may be tamper-resistant.

### (1) Reception unit 601

The reception unit 601 receives, from the CA terminal apparatus 101, a certificate, a private key corresponding thereto, and a white list to which a signature has been given.

### (2) Transmission unit 602

The transmission unit 602 transmits an unsigned white list generated by the unsigned white list generation unit 603 to the CA terminal apparatus 101, and transmits the white list to which a signature has been given by the CA terminal apparatus 101 to the reproduction apparatus 104.

### (3) Unsigned white list generation unit 603

The unsigned white list generation unit 603 generates a white list that shows IDs of contents that should be considered as valid even if the certificates are invalid.

### (4) Unsigned white list storage unit 604

The unsigned white list storage unit 604 stores therein an unsigned white list generated by the unsigned white list generation unit 603. The stored unsigned white list is to be transmitted to the CA terminal apparatus 101 via the transmission unit 602.

### (5) White list storage unit 605

The white list storage unit 605 receives, via the transmission unit 602, a white list to which the CA terminal apparatus 101 has given a signature, and stores the white list therein. The stored white list (which has been signed) is to be transmitted to the reproduction apparatus 104 via the transmission unit 602.

### (6) Certificate/private key storage unit 606

The certificate/private key storage unit 606 receives, via the reception unit 601, a pair of a certificate and a private key corresponding thereto. The certificate has been generated and signed by the CA terminal apparatus 101.

### (7) Program storage unit 607

The program storage unit 607 stores therein programs to be used for reproduction of contents recorded on the recording medium 103.

### (8) Signature generation unit 608

The signature generation unit 608 generates, using a private key stored in the certificate/private key storage unit 606, a signature to be given to programs stored in the program storage unit 607.

### (9) Content ID generation unit 609

The content ID generation unit 609 generates an ID that uniquely identifies a content to be recorded on the recording medium 103. The content IDs to be shown in the white list are generated at this moment.

### (10) Content storage unit 610

The content storage unit 610 stores therein contents to be recorded on the recording medium 103.

### (11) Encryption key storage unit 611

The encryption key storage unit 611 stores therein an encryption key used for encrypting contents to be recorded on the recording medium 103.

### (12) Encryption unit 612

The encryption unit 612 encrypts contents stored in the content storage unit 610, using an encryption key stored in the encryption key storage unit 611.

### (13) Recording unit 613

The recording unit 613 records, on the recording medium 103, a program to which a signature has been given by the signature generation unit 608, a certificate stored in the certificate/private key storage unit 606, a content ID generated by the content ID generation unit 609, and a content encrypted by the encryption unit 612.

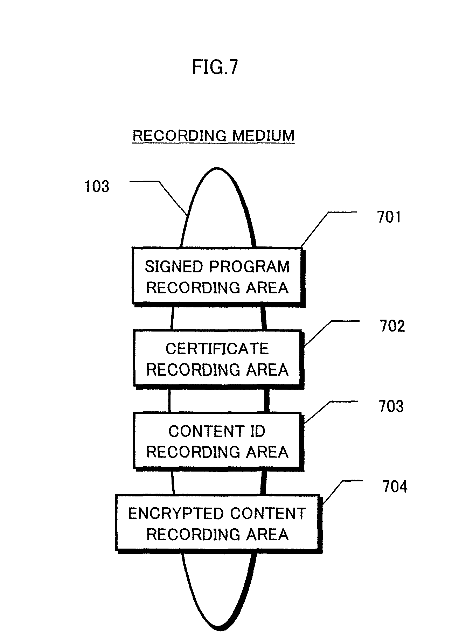

FIG. 7 shows an example of the recording medium 103 on which the above-mentioned pieces of data have been recorded. Programs to which signatures have been given are recorded in a signed program recording area 701. Certificates are recorded in a certificate recording area 702. Content IDs are recorded in a content ID recording area 703. Encrypted contents are recorded in an encrypted contents recording area 704.

### 1.4 Structure of reproduction apparatus 104

### The following describes the structure of the reproduction apparatus 104 in detail.

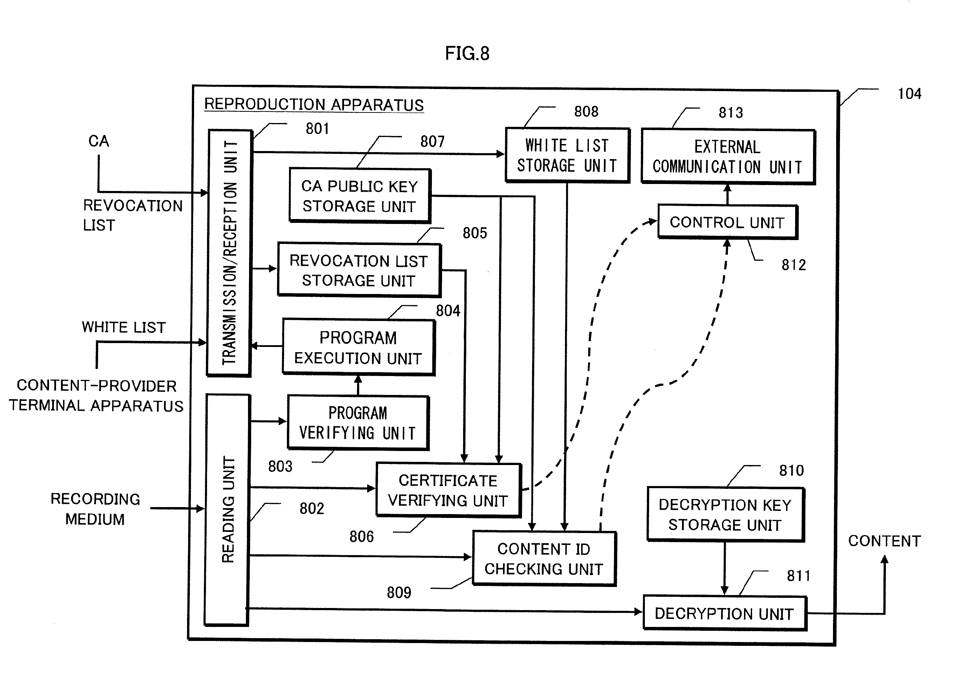

As FIG. 8 shows, the reproduction apparatus 104 includes a transmission/reception unit 801, a reading unit 802, a program verifying unit 803, a program execution unit 804, a revocation list storage unit 805, a certificate verifying unit 806, a CA public key storage unit 807, a white list storage unit 808, a content ID checking unit 809, a decryption key storage unit 810, a decryption unit 811, a control unit 812, and an external communication unit 813.

The reproduction apparatus 104 is structured from a microprocessor, a RAM, a ROM, a hard disk and so on, which are not specifically illustrated. The RAM, the ROM and the hard disk store computer programs. The reproduction apparatus 104 carries out functions thereof as a result of the microprocessor operating in accordance with the computer programs.

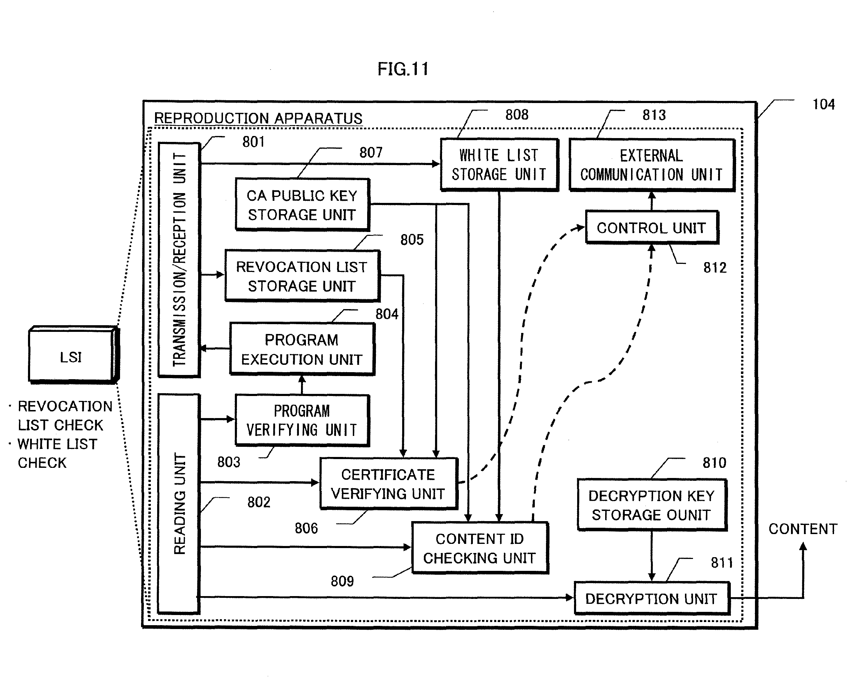

As FIG. 8 shows, regarding the reproduction apparatus 104, the functional blocks, such as the transmission/reception unit 801, the reading unit 802, the program verifying unit 803, the program execution unit 804, the revocation list storage unit 805, the certificate verifying unit 806, the CA public key storage unit 807, the white list storage unit 808, the content ID checking unit 809, the decryption key storage unit 810, the decryption unit 811, the control unit 812, and the external communication unit 813, are typically realized as LSI(s), which is an integrated circuit. Each of the units may be individually realized as one chip. Also, two or more units, or part of each unit may be realized as one chip. FIG. 11 shows an example.

Note that although an LSI is used here, the circuit may be variously described as an IC, a system LSI, a super LSI or an ultra LSI depending on the level of integration.

Note also that the technique used for the integration does not have to be LSI. A special-purpose circuit or general-purpose processor may be used instead. LSI circuits whose configurations can be altered after production such as the programmable FPGA (Field Programmable Gate Array) or a reconfigurable processor whose circuit cell connections and settings are reconfigurable may also be used.

Moreover, if, due to progress in the field of semiconductor technology or the derivation of another technology, a technology to replace LSI emerges, such a technology may be used to integrate the functional blocks. The use of biotechnology or the like is considered to be a possibility.

Finally, each functional block may be realized with software, or a combination of an LSI and software. The software may be tamper-resistant.

### (1) Transmission/reception unit 801

The transmission/reception unit 801 communicates with external apparatuses. Specifically, the transmission/reception unit 801 transmits a request for a revocation list to the CA terminal apparatus 101, and receives the revocation list from the CA terminal apparatus 101. Also, the transmission/reception unit 801 transmits a request for a white list to the content-provider terminal apparatus 102, and receives the white list from the content-provider terminal apparatus 102.

### (2) Reading unit 802

The reading unit 802 reads data recorded on the recording medium 103.

### (3) Program verifying unit 803

The program verifying unit 803 verifies validity of a program read from the recording medium 103 by the reading unit 802. Specifically, the program verifying unit 803 verifies a signature given to the program, to verify validity of the program.

### (4) Program execution unit 804

The program execution unit 804 executes a program verified by the program verifying unit 803. If the program includes an instruction to make a request for a revocation list or an instruction to make a request for a white list, the program execution unit 804 transmits a request via the transmission/reception unit 801.

### (5) Revocation list storage unit 805

The revocation list storage unit 805 stores therein a revocation list received via the transmission/reception unit 801.

### (6) Certificate verifying unit 806

The certificate verifying unit 806 verifies validity of a certificate read by the reading unit 802 from the recording medium 103. Specifically, the certificate verifying unit 806 verifies a signature given to the certificate read from the recording medium 103, using a CA public key stored in the CA public key storage unit 807. Moreover, the certificate verifying unit 806 checks whether an ID included in the certificate is on the revocation list stored in the revocation list storage unit 805. If the ID is included in the list, the certificate verifying unit 806 judges that the certificate has been revoked, regardless of the result of the verification of the signature. These verification results are to be transmitted to the control unit 812, and used for judging whether to activate the external communication unit 813.

### (7) CA public key storage unit 807

The CA public key storage unit 807 stores therein a public key corresponding to private key held by the CA. The CA public key is to be used for verifying a signature given by the CA.

### (8) White list storage unit 808

The white list storage unit 808 stores therein a white list received via the transmission/reception unit 801.

### (9) Content ID checking unit 809

The content ID checking unit 809 checks whether a content ID read by the reading unit 802 from the recording medium 103 is on the white list stored in the white list storage unit 808. If the ID is included in the list, the content ID checking unit 809 judges that the content corresponding to the content ID (or a recording medium on which the content ID is recorded) is valid, regardless of the result of the verification of the certificate performed by the certificate verifying unit 806. These verification results are to be transmitted to the control unit 812, and used for judging whether to activate the external communication unit 813.

### (10) Decryption key storage unit 810

The decryption key storage unit 810 stores therein a decryption key to be used for decrypting a content read by the reading unit 802 from the recording medium 103.

### (11) Decryption unit 811

The decryption unit 811 decrypts a content read by the reading unit 802 from the recording medium 103, using a decryption key stored in the decryption key storage unit 810.

### (12) Control Unit 812

The control unit 812 receives a verification result from the certificate verifying unit 806 and a checking result from the content ID checking unit 809, and controls whether to activate the external communication unit 813 based on the results. If receiving results showing "the certificate is valid" and "the ID of the certificate is not on the revocation list", the control unit 812 activates the external communication unit 813. Even if receiving results showing "the certificate is valid" and "the ID of the certificate is on the revocation list", if receiving a result showing "the ID is on the white list", the control unit 812 activates the external communication unit 813. In other words, regardless the certificate has been revoked or not, the control unit 812 judges that the content is valid if the ID of the content is on the white list, and enables services that use the external communication. As a result, regarding contents that were produced before the certificate has been revoked, it is possible to enjoy services with use of the network even if the same certificate has been revoked due to unauthorized acts. Note that if the ID is on the white list, the external communication unit 813 should be activated regardless of the judgment as to whether the certificate has been revoked or not. Accordingly, if the ID is on the white list, the judgment as to whether "the ID of the certificate is on the revocation list" can be omitted.

In the examples of FIG. 4 and FIG. 5, when the recording medium on which the certificate having a certificate ID 0x0011 is inserted in the reproduction apparatus 104, the external communication unit 813 will not be activated, because the certificate ID is on the revocation list. Accordingly, it is impossible to connect to the external network to enjoy services such as download of extra contents and additional subtitles. On the other hand, even if the certificate having the certificate ID 0x0011 is recorded on the recording medium, if the content recorded on the recording medium has a content ID 0x000C, 0x0027 or 0x00A2, the external communication unit 813 will be activated, because these content IDs are on the white list. Accordingly, it is possible to enjoy the services with use of the external network.

### (13) External communication unit 813

The external communication unit 813 connects to an external network under control of the control unit 812. After activated by the control unit 812, the external communication unit 813 communicates with an external server and performs data transmission and so on in accordance with instructions included in a program being executed by the program execution unit 804.

### 1.5 Operations of reproduction apparatus 104

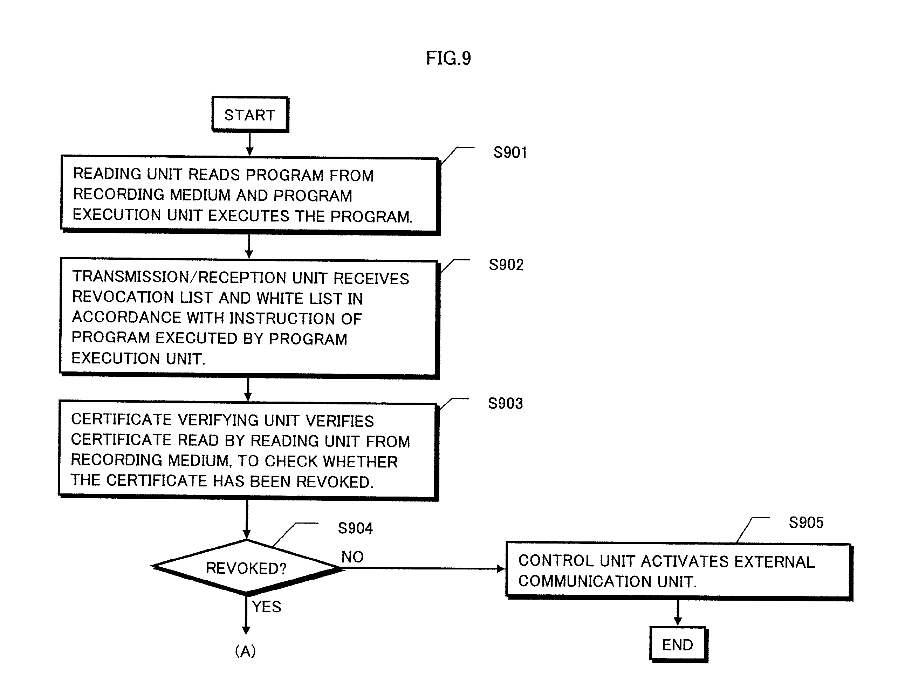

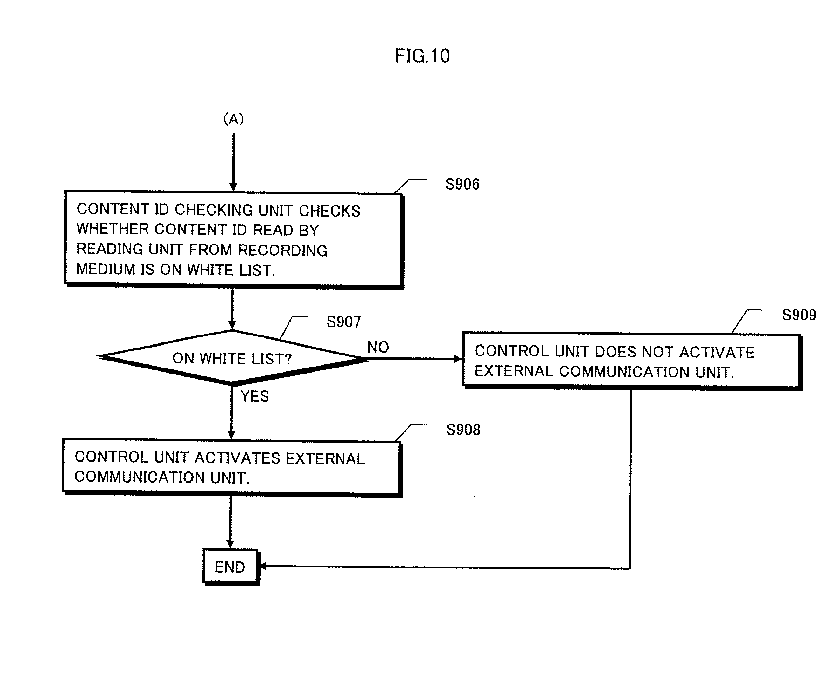

The following explains operations performed by the reproduction apparatus 104 with reference to FIG. 9 and FIG. 10. Note that operations performed by the other apparatuses have been made clear in the detailed explanations. Accordingly, explanations of the operations of the other apparatus are omitted here.

Firstly, the program execution unit 804 executes a program read by the reading unit 802 from the recording medium 103 and verified by the program verifying unit 803 (Step S901). Next, the transmission/reception unit 801 transmits requests for a revocation list and a white list to the CA terminal apparatus 101 and the content-provider terminal apparatus 102 respectively in accordance with instructions by the program being executed by the program execution unit 804, and receives the revocation list and the white list (Step S902). The certificate verification unit 806 verifies a signature that has been given to the certificate, using a CA public key stored in the CA public key storage unit 807. Furthermore, the certificate verification unit 806 checks whether the certificate has been revoked, using a revocation list stored in the revocation list storage unit 805 (Step S903). As a result of the verification and the checking, if the certificate verification unit 806 judges that the verification of the signature has been successful and the certificate has not been revoked (Step S904: NO), the control unit 812 activates the external communication unit 813 (Step S905). If it is judged that the verification of the signature has been successful but the certificate has been revoked (Step S904, YES), the content ID checking unit 809 checks the white list. The content ID checking unit 809 checks a signature that has been given to the white list stored in the white list storing unit 808, using a CA public key stored in the CA public key storage unit 807. If the verification of the signature of the white list has been successful, the content ID checking unit 809 further judges whether a content ID read by the reading unit 802 is on the white list. If it is judged that the content ID is on the white list (YES in Step S907), the control unit 812 activates the external communication unit 813 (Step S908). If it is judged that the content ID is not on the white list (No in Step S907), the control unit 812 does not activate the external communication unit 813 (Step S909). If the verification of the signature given to the white list has not been successful, the processing moves to Step S909 regardless of the judgment result as to whether the content ID is on the white list (or without performing the judgment).

### Other Modifications

The present invention is explained above based on the embodiment. However, the present invention is not limited to the embodiment. The following modifications are included in the present invention as well.
(1) In the embodiment above, the content ID is recorded on the recording medium without being protected. However, the present invention is not limited to this. For example, the content ID may be used to affect encryption of contents, or used to generate encryption key to be used for encryption of contents, or may be used to change the encryption key. Moreover, the content ID may be concatenated with the content, or signature may be given to data formed from the content ID and a hash value of the contents to protect the content ID from tampering. Furthermore, the content ID may be recorded by a special method of writing in which the procedure for writing into the recording medium and the procedure for reading the recording medium are kept secret.

(2) In the embodiment above, IDs to be on the white list are content IDs that can identify contents. However, the present invention is not limited to this. For example, they may be media IDs that can identify the recording media, or IDs of manufacturers that manufacture the recording media, or IDs for identifying manufacturing apparatuses. Alternatively, any other IDs may be used as long as they can identify the contents or the recording media.

(3) In the embodiment above, the external communication unit is activated if the certificate has not been revoked or the content ID is on the white list even if the certificate has been revoked. However, the present invention is not limited to this. For example, the program to be executed by the program execution unit may include an instruction to acquire a revocation list from the CA terminal apparatus, and execution of this program may be one of conditions for activating the external communication unit. Furthermore, the program to be executed by the program execution unit may include an instruction to acquire a white list from the content-provider terminal apparatus, and execution of this program may be one of conditions for activating the external communication unit.

(4) In the embodiment above, the revocation list and the white list are acquired from the CA terminal apparatus and the content-provider terminal apparatus respectively. However, the present invention is not limited to this. For example, both of the revocation list and the white list may be acquired from the CA terminal apparatus, or conversely, both of them may be acquired from the content provider terminal apparatus. Also, it is not necessary that the revocation list and the white list are separate lists. They may be combined as a single list.

(5) In the embodiment above, the certificate verifying unit verifies the certificate, and the content ID checking unit checks the content ID, and the control unit controls the external communication unit in accordance with results of the verification and the checking. However, the present invention is not limited to this. For example, it is possible to use a structure that allows the user of the reproduction apparatus to determine which to be performed between the verification of the certificate and the checking of the content ID. Also, it is possible to use a structure in which the user of the reproduction apparatus can activate the external communication unit even if the control unit does not activate the external communication unit.

(6) In the embodiment above, the control unit controls only whether to activate the external communication unit or not. However, the present invention is not limited to this. For example, the control unit may change the way of controlling in accordance with the type of a function that uses the external communication unit. Specifically, in order to disable only a function of transmitting information relating to users' preference, the control unit does not activate the external communication unit if an instruction in the program to transmit user's information is being executed by the program execution unit, and activates the external communication unit if a different instruction (e.g. an instruction to transmit an ID of a recording medium (a media ID) to a server) in the program is being executed by the program execution unit. Further, a list showing, for each function, whether the external communication unit is to be activated may be transmitted from the CA terminal apparatus, the content-provider terminal apparatus, or other apparatuses. Further, when updating the firm ware, the manufacturer of the reproduction apparatus may notify the reproduction apparatus of which function is to be disabled.

In the case of a system that stops reproduction of contents, copying and so on if the certificate is not valid, the system may control whether to enable reproduction and copying, in the same manner as controlling whether to activate the external communication unit.

(7) In the embodiment above, if a request instruction for a revocation list or a white list is issued from the program to be executed by the program execution unit, the revocation list or the white list is acquired via the transmission/reception unit. However, the present invention is not limited to this. For example, acquisition of a list may be permitted only once between insertion and ejection of a recording medium, and even if a request for acquiring a list is issued a plurality of times from the program to be executed by the program execution unit, the transmission/reception unit may not follow the second instruction and later. Alternatively, time limit (once in a hour, once in a week, etc.) may be set, and the transmission/reception unit may not follow the instruction from the program if the limit is not satisfied.

(8) In the embodiment above, a single apparatus has a plurality of functions (components). However, the present invention is not limited to this. The functions (components) may be divided into a plurality of apparatuses respectively. The present invention includes a case where the same effect and function may be realized by combinations of such apparatuses.

(9) Part or all of the components included in each of the apparatuses described above may be structured from an IC card or a single module which is attachable to the apparatus. The IC card or the module is a computer system structured from a microprocessor, a ROM, a RAM and so on. The IC card or the module may include the super-multifunctional LSI described above. The IC card or the module carries out functions thereof as a result of the microprocessor operating in accordance with computer programs. The IC card or the module may be tamper-resistant.

(10) The present invention may be the methods indicated above. Further, these methods may be a computer program executed by a computer and further be the digital signal of the computer program.

Further, the present invention may be the above-mentioned computer program and the digital signal recorded onto a recording medium that can be read by a computer. Examples of such recording media include a flexible disk, a hard disk, a CD-ROM, an MO, a DVD, a DVD-ROM, a DVD-RAM, a BD (Blu-ray Disc), a semiconductor memory and the like.

Further, the present invention may be realized such that the computer program and the digital signal are transmitted across telecommunications networks, wired and wireless communication lines, networks such as the Internet, data broadcasting, and so on.

Further, the present invention may be a computer system having a microprocessor and a memory, the memory holding the above-mentioned computer program and the microprocessor performing operations according to the computer program.

Further, the computer program and the digital signal may be installed on an independent computer system by either recording the digital signal one of the recording medium and transferring the recording medium, or transferring the computer program and digital signal via one of the networks.
(11) The present invention may include various combinations of the embodiment and the modifications.

### Summary

(1) One aspect of the present invention is a reproduction apparatus that reproduces a content recorded on a recording medium that has the content and a certificate recorded thereon, the reproduction apparatus comprising: a reading unit operable to read the content and the certificate from the recording medium; a verifying unit operable to verify validity of the certificate; a communication unit operable to communicate with external apparatuses via a network; and a control unit operable to control the communication unit to activate or not to activate the communication unit in accordance with a result of verification performed by the verifying unit.

(2) In the reproduction apparatus of (1), the control unit may not activate the communication unit when the verifying unit judges that the certificate is invalid.

(3) The reproduction apparatus of (1) may further comprise a revocation list storage unit operable to store a revocation list that shows an identifier of a certificate to be revoked, wherein the verifying unit may verify whether an identifier of the certificate read from the recording medium is on the revocation list.

(4) In the reproduction apparatus of (3), the control unit may not activate the communication unit when the verifying unit judges that the identifier of the certificate is on the revocation list.

(5) In the reproduction apparatus of (1), the recording medium may further have a content identifier recorded thereon, and the reproduction apparatus may further comprise: a valid-content list storage unit operable to store a valid-content list that shows an identifier of a valid content; and a checking unit operable to check whether the content read from the recording medium is valid.

(6) In the reproduction apparatus of (5), the control unit may activate the communication unit when the checking unit judges that the content identifier is on the valid-content list.

(7) In the reproduction apparatus of (5), even when the verifying unit judges that the identifier of the certificate is on the revocation list, the control unit may activate the communication unit when the checking unit judges that the content identifier is on the valid-content list.

(8) In the reproduction apparatus of (1), the recording medium may further have a program recorded thereon, which pertains to reproduction of the content, the reproduction apparatus may further comprise an execution unit operable to execute the program, and the control unit may activate the communication unit when the program provides an instruction for acquiring a revocation list from outside.

(9) In the reproduction apparatus of (8), the control unit may not activate the communication unit if the program does not include the instruction for acquiring a revocation list from outside.

(10) In the reproduction apparatus of (8), a signature may have been given to the program, and the reproduction apparatus may further comprise a signature verifying unit operable to verify the signature, using the certificate.

(11) Another aspect of the present invention is a copyright protection system that includes a Certificate Authority terminal apparatus that generates and issues a certificate, a content-provider terminal apparatus that records a content and a certificate on a recording medium and provides a user with the content, and a reproduction apparatus that reproduces the content recorded on the recording medium, the Certificate Authority terminal apparatus comprising a certificate generation unit operable to generate a certificate, the content-provider terminal apparatus comprising a recording unit operable to record a content and a certificate on the recording medium, and the reproduction apparatus comprising:
a reading unit operable to read the content and the certificate from the recording medium; a verifying unit operable to verify validity of the certificate; a communication unit operable to communicate with external apparatuses via a network; and a control unit operable to control the communication unit to activate or not to activate the communication unit in accordance with a result of verification performed by the verifying unit.

(12) In the copyright protection system of (11), the control unit of the reproduction apparatus may not activate the communication unit when the verifying unit judges that the certificate is invalid.

(13) In the copyright protection system of (11), the reproduction apparatus may further comprise a revocation list storage unit operable to store a revocation list that shows an identifier of a certificate to be revoked, and the verifying unit may verify whether an identifier of the certificate read from the recording medium is on the revocation list.

(14) In the copyright protection system of (13), the control unit of the reproduction apparatus may not activate the communication unit when the verifying unit judges that the identifier of the certificate is on the revocation list.

(15) In the copyright protection system of (11), the recording unit of the content-provider terminal apparatus may further record a content identifier on the recording medium, and the reproduction apparatus may further comprise: a valid-content list storage unit operable to store a valid-content list that shows an identifier of a valid content; and a checking unit operable to check whether the content read from the recording medium is valid.

(16) In the copyright protection system of (15), the control unit of the reproduction apparatus may activate the communication unit when the checking unit judges that the content identifier is on the valid-content list.

(17) In the copyright protection system of (15), even when the verifying unit judges that the identifier of the certificate is on the revocation list, the control unit of the reproduction apparatus may activate the communication unit when the checking unit judges that the content identifier is on the valid-content list.

(18) In the copyright protection system of (11), even when the verifying unit judges that the identifier of the certificate is on the revocation list, the control unit of the reproduction apparatus activates the communication unit when the checking unit judges that the content identifier is on the valid-content list.

(19) In the copyright protection system of (18), the control unit of the reproduction apparatus may not activate the communication unit when a program provides an instruction for acquiring a revocation list from outside.

(20) In the copyright protection system of (18), even when the verifying unit judges that the identifier of the certificate is on the revocation list, the control unit of the reproduction apparatus may activate the communication unit when the checking unit judges that the content identifier is on the valid-content list.

(21) In the copyright protection system of (15), the recording unit of the content-provider terminal apparatus may record the content identifier on the recording medium such that the content identifier can not be tampered with.

(22) In the copyright protection system of (21), the content-provider terminal apparatus may further comprise an encryption unit operable to encrypt the content based on the content identifier.

(23) In the copyright protection system of (21), the content-provider terminal apparatus may further comprise a signature generation unit operable to give a signature to the content identifier and a hash value of the content.

(24) Another aspect of the present invention is a reproduction method for reproducing a content recorded on a recording medium that has the content and a certificate recorded thereon, the reproduction method comprising: a reading step of reading the content and the certificate from the recording medium; a verifying step of verifying validity of the certificate; a communication step of communicating with external apparatuses via a network; and a control step of controlling the communication step to activate or not to activate the communication step in accordance with a result of verification performed in the verifying step.

(25) In the reproduction method of (24), the control step may not activate the communication step when the verifying step judges that the certificate is invalid.

(26) The reproduction method of (24) may further comprise a revocation list storage step of storing a revocation list that shows an identifier of a certificate to be revoked, wherein the verifying step may verify whether an identifier of the certificate read from the recording medium is on the revocation list.

(27) The reproduction method of (24) may further comprise a revocation list storage step of storing a revocation list that shows an identifier of a certificate to be revoked, wherein the verifying step may verify whether an identifier of the certificate read from the recording medium is on the revocation list.

(28) Another aspect of the present invention is a program that reproduces a content recorded on a recording medium that has the content and a certificate recorded thereon, the program comprising:
a reading step of reading the content and the certificate from the recording medium; a verifying step of verifying validity of the certificate; a communication step of communicating with external apparatuses via a network; and a control step of controlling the communication step to activate or not to activate the communication step in accordance with a result of verification performed in the verifying step.

(29) The program of (28) may be recorded on a computer-readable recording medium.

(30) Another aspect of the present invention is an integrated circuit that reproduces a content recorded on a recording medium that has the content and a certificate recorded thereon, the integrated circuit comprising: a reading unit operable to read the content and the certificate from the recording medium; a verifying unit operable to verify validity of the certificate; a communication unit operable to communicate with external apparatuses via a network; and a control unit operable to control the communication unit to activate or not to activate the communication unit in accordance with a result of verification performed by the verifying unit.

(31) With the stated structure, it is possible to control the communication unit, to control communications with the server in accordance with a result of verification of the certificate. Therefore, if the certificate is to be revoked, it is possible to prevent personal information such as a user's viewing history collected by the reproduction apparatus from being transmitted to the server. The certificate to be revoked means that it has been exposed or hacked at a certain timing. If only simply inhibiting reproduction of a content when the certificate has been revoked, there is a disadvantage that the content that has been manufactured before it becomes necessary to revoke the certificate will be not able to enjoy services via a network, in spite of the fact that it was able to enjoy such services at the time of the manufacture. For this reason, the present invention uses the revocation list and the valid-content list in combination. In the present invention, certificates that should be revoked are listed in the revocation list, and contents that have been produced before the certificates are revoked are listed in the valid-content list to enable use of such contents. As a result, it is possible to realize both security and user convenience.

### Industrial Applicability

The reproduction apparatus described above can be used for business purposes i.e., can be used repeatedly and continuously, in the industry where the digital contents are provided to users, in the manufacturing industry where reproduction apparatuses for reproducing digital contents are manufactured, and the selling industry where the reproduction apparatuses for reproducing digital contents are sold.

## Claims

1. A reproduction apparatus that reproduces a content, comprising: a reading unit operable to read, from a recording medium, a content, a program including an instruction to connect to an external network, and a certificate for use in verification of validity of the program;
a first verification unit operable to verify validity of the program, using the certificate;
an execution unit operable to execute the program verified by the first verification unit;
a second verification unit operable to verify validity of the certificate;
a communication unit operable to connect to the external network and operate according to the instruction included in the program; and
a control unit operable to perform control to restrain the communication unit from connecting to the external network if the second verification unit judges that the certificate is not valid, even if the first verification unit has judged that the program is valid.

2. The reproduction apparatus of Claim 1, wherein
the second verification unit stores therein a certificate list that includes an identifier of at least one certificate that is to be judged as having been revoked, judges whether an identifier of the certificate read by the reading unit is included in the certificate list, and determines that the certificate has been revoked if judged that the identifier of the certificate is included in the certificate list.

3. The reproduction apparatus of Claim 2, wherein
the program further includes an acquisition instruction to acquire the certificate list from an external apparatus via the external network,
when the execution unit executes the acquisition instruction by executing the program, the control unit performs the control such that the communication unit connects to the external network before the second verification unit verifies validity of the certificate, in order that the second verification unit receives the certificate list according to the acquisition instruction, and
the second verification unit stores therein the certificate list received from the external apparatus.

4. The reproduction apparatus of Claim 2, wherein
the program is either a program that includes an acquisition instruction to acquire the certificate list from an external apparatus via the external network or a program that does not include the acquisition instruction, and
if the program does not includes the acquisition instruction to acquire the certificate list from the external apparatus via the external network, the control unit performs the control to restrain the communication unit from connecting to the external network, before the second verification unit verifies validity of the certificate.

5. The reproduction apparatus of Claim 2, wherein
the certificate includes a public key,
the program is given a signature based on a private key corresponding to the public key,
the first verification unit verifies validity of the program by verifying the signature given to the program,
the control unit performs the control to restrain the communication unit from connecting to the external network if the second verification unit judges that the identifier of the certificate is included in the certificate list, even if the first verification unit has judged that the program is valid.

6. The reproduction apparatus of Claim 1, further comprising
a confirmation unit operable to confirm whether the recording medium is an old recording medium that has been manufactured before the certificate has been revoked, wherein
the control unit performs the control such that the communication unit connects to the external network if the confirmation unit judges that the recording medium is the old medium, even if the second verification unit has judged that the certificate has been revoked.

7. The reproduction apparatus of Claim 6, wherein
the recording medium further stores thereon first information that pertains to the recording medium, and
the confirmation unit acquires second information that indicates an old recording medium that has been manufactured before the certificate has been revoked, and compares the first information with the second information to judge whether the recording medium is the old recording medium.

8. The reproduction apparatus of Claim 7, wherein
the first information is an identifier of the recording medium,
the second information is a recording medium list that includes an identifier of at least one recording medium that has been manufactured before the certificate has been revoked, and
the confirmation unit confirms whether the identifier of the recording medium is included in the recording medium list, and determines that the recording medium is the old recording medium if confirmed that the identifier of the recording medium is included in the recording medium list.

9. The reproduction apparatus of Claim 7, wherein
the program further includes an acquisition instruction to acquire the recording medium list from an external apparatus via the external network,
when the execution unit executes the acquisition instruction by executing the program, the control unit performs the control such that the communication unit connects to the external network before the confirmation unit judge whether the recording medium is the old recording medium, in order that the confirmation unit receives the recording medium list according to the acquisition instruction, and
the confirmation unit stores therein the recording medium list received from the external apparatus.

10. A copyright protection system that includes a Certificate Authority terminal apparatus, a content-provider terminal apparatus, and a reproduction apparatus that reproduces a content,
the Certificate Authority terminal apparatus comprising
a certificate generation unit operable to generate a certificate for use in verification of validity of a program, the program including an instruction to transmit information that pertains to viewing of a content to another apparatus via an external network,
the content-provider terminal apparatus comprising
a recording unit operable to record the content, the certificate generated by the Certificate Authority terminal apparatus and the program onto a recording medium, and
the reproduction apparatus comprising:
a reading unit operable to read, from the recording medium, the content, the program and the certificate;
a first verification unit operable to verify validity of the program, using the certificate;
an execution unit operable to execute the program verified by the first verification unit;
a second verification unit operable to verify validity of the certificate;
a communication unit operable to connect to the external network and operate according to the instruction included in the program; and
a control unit operable to perform control to restrain the communication unit from connecting to the external network if the second verification unit judges that the certificate is not valid, even if the first verification unit has judged that the program is valid.

11. A control method for use by a reproduction apparatus that reproduces a content, the control method comprising:
a reading step of reading, from a recording medium, a content, a program including an instruction to connect to an external network, and a certificate for use in verification of validity of the program;
a first verification step of verifying validity of the program, using the certificate;
an execution step of executing the program verified in the first verification step;
a second verification step of verifying validity of the certificate;
a communication step of connecting to the external network and operating according to the instruction included in the program; and
a control step of performing control to restrain the communication unit from connecting to the external network if the second verification step judges that the certificate is not valid, even if the first verification step has judged that the program is valid.

12. A computer-readable recording medium that stores thereon a computer program for use by a reproduction apparatus that reproduces a content, the computer program causing a computer to perform:
a reading step of reading, from a recording medium, a content, a program including an instruction to connect to an external network, and a certificate for use in verification of validity of the program;
a first verification step of verifying validity of the program, using the certificate;
an execution step of executing the program verified in the first verification step;
a second verification step of verifying validity of the certificate;
a communication step of connecting to the external network and operating according to the instruction included in the program; and
a control step of performing control to restrain the communication unit from connecting to the external network if the second verification step judges that the certificate is not valid, even if the first verification step has judged that the program is valid.

13. An integrated circuit for use in a reproduction apparatus that reproduces a content, the integrated circuit comprising:
a reading unit operable to read, from a recording medium, a content, a program including an instruction to connect to an external network, and a certificate for use in verification of validity of the program;
a first verification unit operable to verify validity of the program, using the certificate;
an execution unit operable to execute the program verified by the first verification unit;
a second verification unit operable to verify validity of the certificate;
a communication unit operable to connect to the external network and operate according to the instruction included in the program; and
a control unit operable to perform control to restrain the communication unit from connecting to the external network if the second verification unit judges that the certificate is not valid, even if the first verification unit has judged that the program is valid.
